# EUROPEAN PATENT APPLICATION

(11) **EP 3 786 418 A1**
(43) Date of publication of application: **03.03.2021**
(21) Application number: 20182631.0
(22) Date of filing: 26.06.2020
(51) Int. Cl.: F01D 11/00, F01D 11/02, F16J 15/44

(54) **HYDROSTATIC SEAL WITH SEAL STOPS**

(30) Priority: 26.08.2019 US 201916550559
(71) Applicant: Raytheon Technologies Corporation, Farmington, CT 06032 (US)
(72) Inventor: CHUONG, Conway, Manchester, CT Connecticut 06040 (US); DIFRANCESCO, Michael L., Waterbury, CT Connecticut 06708 (US)
(74) Representative: Dehns

(57) **Abstract**

A hydrostatic seal assembly (60) includes a seal carrier (66), a seal shoe (72) located at the seal carrier (66) and configured for travel relative to the seal carrier (66) to maintain a selected gap (76) between the seal shoe (72) and a rotating component (64), and a travel stop. The travel stop includes a stop rib (92) located at one of the seal carrier (66) or the seal shoe (72), and a stop groove (94) located at the other of the seal carrier (66) or the seal shoe (72). The stop rib (92) is positioned at least partially in the stop groove (94) to limit travel of the seal shoe (72) relative to the seal carrier (66).

## Description

### STATEMENT OF FEDERAL SUPPORT

This invention was made with Government support awarded by the United States. The Government has certain rights in the invention.

### BACKGROUND

Exemplary embodiments pertain to the art of gas turbine engines, and more particularly to seal assemblies for gas turbine engines.

In a gas turbine engine, a number of components rotate under tight tolerances about an engine central longitudinal axis relative to static components. For example, the compressor and turbine sections of the gas turbine engine include rotating rotors with rotor blades extending radially outward. The rotor rotates relative to a stator with a small annular gap therebetween. To increase efficiency of the gas turbine engine, it is important that such small gaps be maintained to limit leakage through the gap, but to also allow for rotation of the rotor relative to the stator.

Seals are often utilized to manage leakage through the gaps. Such seals are typically fixed to static components and may be contact seals, such as labyrinth or brush seals, while others may be non-contact seals such as hydrostatic seals. Some hydrostatic seals are configured with a shoe having a plurality of beams, the beams having radial travel in response to a pressure differential across the seal.

The seal shoe requires stop features to limit its travel. The stops prevent the beams from becoming over-stressed if they travel too far, by physically stopping them at a desired limit. Current hydrostatic seals typically have the stops integrated into the shoes as "hooks". The stops take up quite a bit of space in the hydrostatic seal system, since they need to allow the full travel range while being large enough to withstand the stresses applied from the shoe. Subsequently packaging becomes difficult, and less space is available for beam optimization. Further, the stop features add weight to the shoe, reducing its natural frequency and risking modal response issues, and manufacture of this type of stop may be more difficult due to its small size and complexity.

### BRIEF DESCRIPTION

In one embodiment, a hydrostatic seal assembly includes a seal carrier, a seal shoe located at the seal carrier and configured for travel relative to the seal carrier to maintain a selected gap between the seal shoe and a rotating component, and a travel stop. The travel stop includes a stop rib located at one of the seal carrier or the seal shoe, and a stop groove located at the other of the seal carrier or the seal shoe. The stop rib is positioned at least partially in the stop groove to limit travel of the seal shoe relative to the seal carrier.

Additionally or alternatively, in this or other embodiments the seal carrier includes a radial outer wall, and an axial aft wall. One of the stop rib or the stop groove is located at the axial aft wall of the seal carrier.

Additionally or alternatively, in this or other embodiments the stop rib is located at the axial aft wall, extending axially toward the seal shoe.

Additionally or alternatively, in this or other embodiments the seal shoe is configured for radial travel relative to the seal carrier and the travel stop is configured to limit said radial travel.

Additionally or alternatively, in this or other embodiments a groove radial width of the stop groove is greater than a rib radial width of the stop rib, thereby allowing full travel of the seal shoe relative to the seal carrier.

Additionally or alternatively, in this or other embodiments the stop rib has one of a rectangular, triangular or semi-circular cross-sectional shape.

Additionally or alternatively, in this or other embodiments the seal shoe is supported by one or more seal beams configured as spring elements integral with the seal shoe.

In another embodiment, a turbine section of a gas turbine engine includes a turbine stator, a turbine rotor configured to rotate about an engine central longitudinal axis relative to the turbine stator and a hydrostatic seal assembly. The hydrostatic seal assembly includes a seal carrier, a seal shoe located at the seal carrier and configured for travel relative to the seal carrier to maintain a selected gap between the seal shoe and the turbine rotor, and a travel stop. The travel stop includes a stop rib located at one of the seal carrier or the seal shoe, and a stop groove located at the other of the seal carrier or the seal shoe. The stop rib is positioned at least partially in the stop groove to limit travel of the seal shoe relative to the seal carrier.

Additionally or alternatively, in this or other embodiments the seal carrier includes a radial outer wall, and an axial aft wall. One of the stop rib or the stop groove located at the axial aft wall of the seal carrier.

Additionally or alternatively, in this or other embodiments the stop rib is located at the axial aft wall, extending axially toward the seal shoe.

Additionally or alternatively, in this or other embodiments the seal shoe is configured for radial travel relative to the seal carrier and the travel stop is configured to limit said radial travel.

Additionally or alternatively, in this or other embodiments a groove radial width of the stop groove is greater than a rib radial width of the stop rib, thereby allowing full travel of the seal shoe relative to the seal carrier.

Additionally or alternatively, in this or other embodiments the stop rib has one of a rectangular, triangular or semi-circular cross-sectional shape.

Additionally or alternatively, in this or other embodiments the seal shoe is supported by one or more seal beams configured as spring elements integral with the seal shoe.

In yet another embodiment, a gas turbine engine includes a combustor and a turbine section in fluid communication with the combustor. The turbine section includes a turbine stator, a turbine rotor configured to rotate about an engine central longitudinal axis relative to the turbine stator, and a hydrostatic seal assembly. The hydrostatic seal assembly includes a seal carrier, a seal shoe located at the seal carrier and configured for travel relative to the seal carrier to maintain a selected gap between the seal shoe and the turbine rotor, and a travel stop. The travel stop includes a stop rib located at one of the seal carrier or the seal shoe, and a stop groove located at the other of the seal carrier or the seal shoe. The stop rib is positioned at least partially in the stop groove to limit travel of the seal shoe relative to the seal carrier.

Additionally or alternatively, in this or other embodiments the seal carrier includes a radial outer wall and an axial aft wall. One of the stop rib or the stop groove is located at the axial aft wall of the seal carrier.

Additionally or alternatively, in this or other embodiments the stop rib is located at the axial aft wall, extending axially toward the seal shoe.

Additionally or alternatively, in this or other embodiments the seal shoe is configured for radial travel relative to the seal carrier, and the travel stop is configured to limit said radial travel.

Additionally or alternatively, in this or other embodiments a groove radial width of the stop groove is greater than a rib radial width of the stop rib, thereby allowing full travel of the seal shoe relative to the seal carrier.

Additionally or alternatively, in this or other embodiments the stop rib has one of a rectangular, triangular or semi-circular cross-sectional shape.

### BRIEF DESCRIPTION OF THE DRAWINGS

The following descriptions should not be considered limiting but are provided by way of example only. With reference to the accompanying drawings, like elements are numbered alike:
FIG. 1 is cross-sectional view of an embodiment of a gas turbine engine;
FIG. 2 is a cross-sectional view of an embodiment of a hydrostatic seal assembly for a gas turbine engine;
FIG. 3 is a cross-sectional view of an embodiment of a seal shoe of a hydrostatic seal assembly;
FIG. 4 is another view of an embodiment of a hydrostatic seal assembly; and
FIG. 5 is a cross-sectional view of an embodiment of a travel stop feature of a hydrostatic seal assembly.

### DETAILED DESCRIPTION

A detailed description of one or more embodiments of the disclosed apparatus and method are presented herein by way of exemplification and not limitation with reference to the Figures.

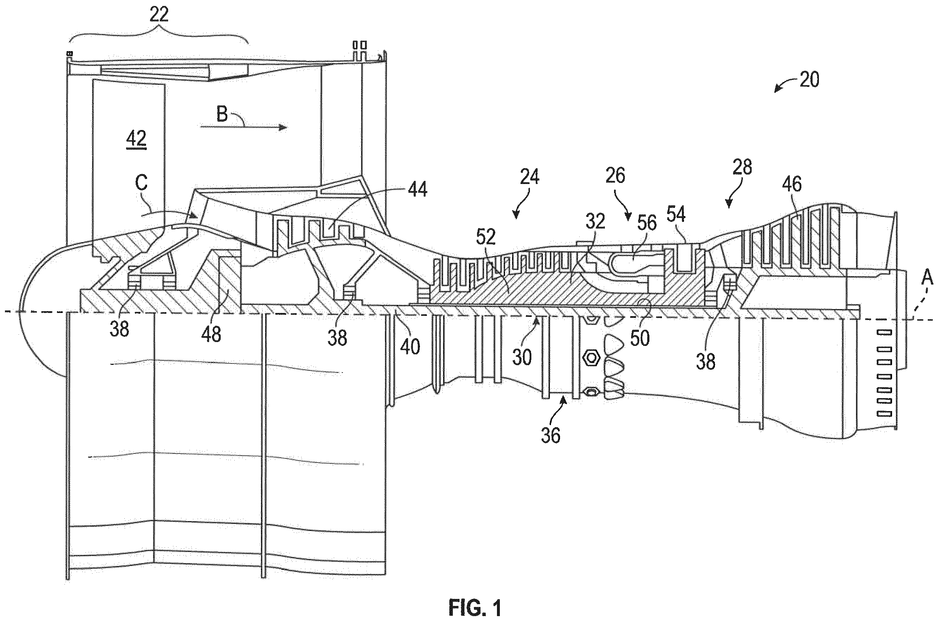

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including, for example, one spool or three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition--typically cruise at about 0.8 Mach (274 m/s) and about 35,000 feet (10,668 meters). The flight condition of 0.8 Mach (274 m/s) and 35,000 ft (10,668 meters), with the engine at its best fuel consumption--also known as "bucket cruise Thrust Specific Fuel Consumption ('TSFC')"--is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(518.7 °R)]^{0.5}. The "Low corrected fan tip speed" as disclosed herein according to one non-limiting embodiment is less than about 1150 ft/second (350.5 m/sec).

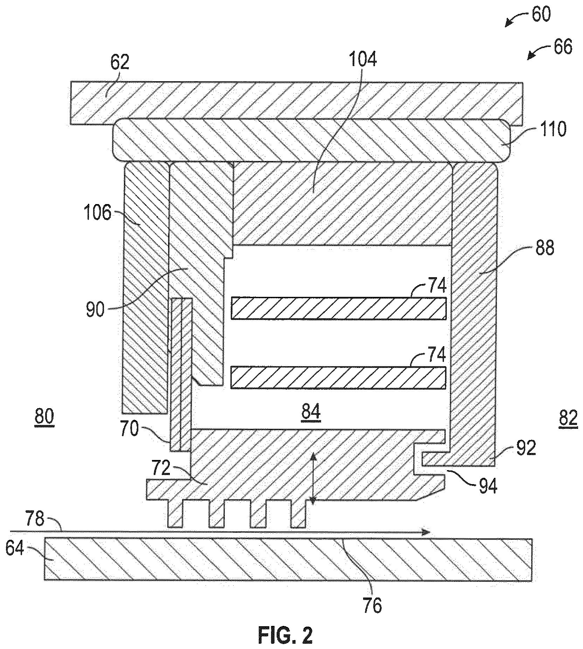

Referring now to FIG. 2, an embodiment of a seal 60 between a turbine stator 62 and a turbine rotor 64 is shown. The turbine rotor 64 is configured to rotate about the engine central longitudinal axis A relative to the turbine stator 62. While the description herein relates to sealing between a turbine stator and a turbine rotor, one skilled in the art will readily appreciate that the present disclosure may be readily applied at other locations of the gas turbine engine to provide sealing between a rotating component and a stationary component.

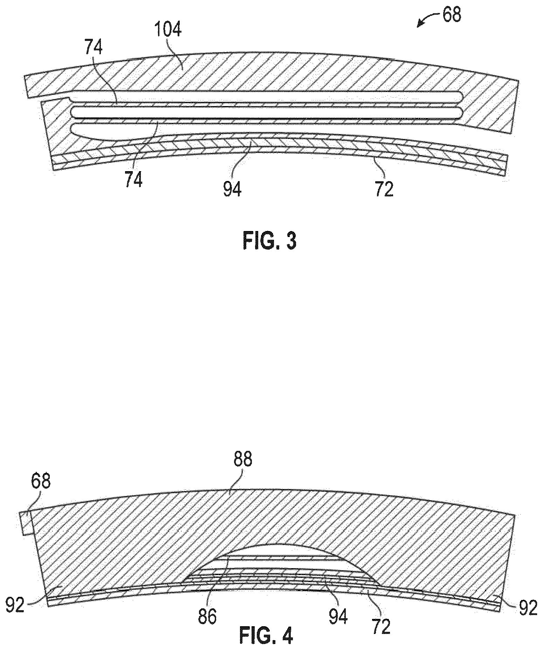

The seal 60 is fixed to the turbine stator 62 via a seal carrier 66 and includes a primary seal 68 and one or more secondary seals 70. The primary seal 68 (shown best in FIG. 3) includes a seal support 104, which supports a seal shoe 72 via one or more seal beams 74 which, as shown best in FIG. 3, are configured as spring elements integral with the seal support 104 and the seal shoe 72. Referring again to FIG. 2, the seal shoe 72 is radially moveable relative to the seal support 104, and radially toward the turbine stator 62 and radially away from the turbine stator 62 to maintain a desired air gap 76 between the turbine rotor 64 and the seal shoe 72.

In operation, an airflow 78 flows through the air gap 76 from a high pressure area 80 upstream of the seal 60 toward a low pressure area 82 downstream of the seal 60. Further, airflow enters a seal cavity 84 radially outboard of the seal shoe 72 via one or more plate openings 86 in an aft plate 88 of the seal carrier 66, which is downstream of the seal shoe 72 and in some embodiments axially abuts the seal shoe 72. The secondary seals 70 are located upstream of the seal shoe 72 and in some embodiments abut the seal shoe 72. The secondary seal 70 prevents airflow from entering the seal cavity 84 from the high pressure area 80 and/or prevents airflow from exiting the seal cavity 84 via an upstream side of the seal 60. In some embodiments, the secondary seals 70 are axially retained at the seal shoe 72 by a secondary seal cover 106 upstream of the secondary seals 70. Further, a radial and axial position of the secondary seal 70 may be maintained by a spacer 90. The seal shoe 72 moves radially until a pressure equilibrium between the air gap 76 and the seal cavity 84 is reached.

The seal carrier 66 includes the aft plate 88 and a radially outer wall 110 extending from the aft plate 88 to radially retain the primary seal 68. The seal carrier 66 is secured to the turbine stator 62 or other static structure at, for example, the radial outer wall 110. In some embodiments, the seal carrier 66, including the aft plate 88 and the radially outer wall 110 is formed as a single unitary component.

The radial travel or movement of the seal shoes 72 is limited by radial stop features of the primary seal 68 and of the seal carrier 66. For example, the seal carrier 66 includes a stop rail 92 extending axially from the aft plate 88 and at least partially inserted into a corresponding stop groove 94 of the seal shoe 72. While in the embodiment of FIG. 2 includes a stop rail 92 at the aft plate 88 and a stop groove 94 at the seal shoe 72, one skilled in the art will readily appreciate that in other embodiments the configuration may be substantially reversed, with the stop rail 92 extending from the seal shoe 72 and the stop groove 94 disposed in the aft plate 88.

Referring now to FIG. 3, the stop groove 94 formed in the seal shoe 72 extends circumferentially along a length of the seal shoe 72, and in some embodiments is continuous and unbroken along an entire circumferential length of the seal shoe 72. As shown in FIG. 4, the stop rail 92 extends circumferentially along the aft plate 88, and in some embodiments may be discontinuous at, for example, the plate openings 86 formed in the aft plate 88.

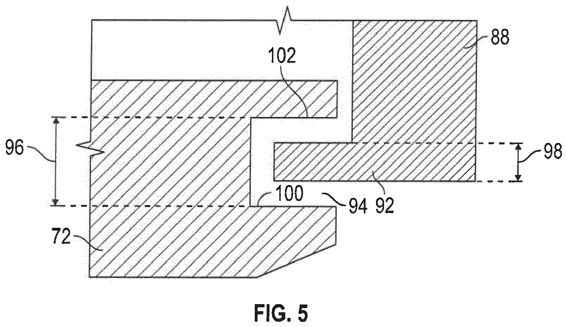

Referring to FIG. 5, the stop groove 94 has a groove radial width 96 greater than a rail radial width 98 of the stop rail 92 in the aft wall 88 to allow for radial movement or travel of the seal shoe 72 relative to the seal carrier 66. The sizing of the groove radial width 96 and the rail radial width 98 allow for full travel of the seal shoe 72 while acting as a stop at designed travel limits of the seal shoe 72. At a full radially outward travel position of the seal shoe 72, the stop rail 92 contacts a radial inner wall 100 of the stop groove 94. Similarly, at a full radially inward travel position of the seal shoe 72, the stop rail 92 contacts a radial outer wall 102 of the stop groove 94. In the embodiments illustrated herein, the stop groove 94 and the stop rail 92 each have a rectangular cross-sectional shape. It is to be appreciated, however, that in other embodiments, one or both of the stop groove 94 or the stop rail 92 may have another cross-sectional shape, such as triangular, semicircular, or the like.

The hydrostatic seal 60 disclosed herein having a stop groove 94 and stop rail 92 results in a more compact, more readily manufacturable hydrostatic seal 60, with a resulting ability to more readily fit into a compact turbine architecture. The resulting shoe 72 is lighter, and has a higher natural frequency and is less prone to vibration excitation and damage.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A hydrostatic seal assembly (60), comprising:
a seal carrier (66);
a seal shoe (72) disposed at the seal carrier (66) and configured for travel relative to the seal carrier (66) to maintain a selected gap (76) between the seal shoe (72) and a rotating component (64); and
a travel stop including:
a stop rib (92) disposed at one of the seal carrier (66) or the seal shoe (72); and
a stop groove (94) disposed at the other of the seal carrier (66) or the seal shoe (72), the stop rib (92) disposed at least partially in the stop groove (94) to limit travel of the seal shoe (72) relative to the seal carrier (66).

2. The hydrostatic seal assembly (60) of claim 1, wherein the seal carrier (66) includes:
a radial outer wall (110); and
an axial aft wall (88), one of the stop rib (92) or the stop groove (94) disposed at the axial aft wall (88) of the seal carrier (66).

3. The hydrostatic seal assembly (60) of claim 2, wherein the stop rib (92) is disposed at the axial aft wall (88), extending axially toward the seal shoe (72).

4. The hydrostatic seal assembly (60) of claim 1, 2 or 3, wherein the seal shoe (72) is configured for radial travel relative to the seal carrier (66), the travel stop configured to limit said radial travel.

5. The hydrostatic seal assembly (60) as claimed in any preceding claim wherein a groove radial width (96) of the stop groove (94) is greater than a rib radial width (98) of the stop rib (92), thereby allowing full travel of the seal shoe (72) relative to the seal carrier (66).

6. The hydrostatic seal assembly (60) as claimed in any preceding claim wherein the stop rib (92) has one of a rectangular, triangular or semi-circular cross-sectional shape.

7. The hydrostatic seal assembly (60) as claimed in any preceding claim wherein the seal shoe (72) is supported by one or more seal beams (74) configured as spring elements integral with the seal shoe (72).

8. A turbine section (28) of a gas turbine engine (20), comprising:
a turbine stator (62);
a turbine rotor (64) configured to rotate about an engine central longitudinal axis A relative to the turbine stator (62); and
the hydrostatic seal assembly (60) of any preceding claim, wherein the turbine rotor (64) is configured as the rotating component (64).

9. A gas turbine engine (20), comprising:
a combustor (56), and
the turbine section (28) of claim 8 in fluid communication with the combustor (56).
